Europäisches Patentamt

European Patent Office

Office européen des brevets

(19)

(11) Veröffentlichungsnummer : **0 420 897 B1**

(12) # EUROPÄISCHE PATENTSCHRIFT

(45) Veröffentlichungstag der Patentschrift :
**15.04.92 Patentblatt 92/16**

(51) Int. Cl.[5] : **G01D 5/38,** G01P 3/36

(21) Anmeldenummer : **89907065.0**

(22) Anmeldetag : **22.06.89**

(86) Internationale Anmeldenummer :
**PCT/DE89/00409**

(87) Internationale Veröffentlichungsnummer :
**WO 89/12799 28.12.89 Gazette 89/30**

(54) **VERFAHREN ZUR WEG- UND WINKELMESSUNG.**

(30) Priorität : **22.06.88 DE 3821046**

(43) Veröffentlichungstag der Anmeldung :
**10.04.91 Patentblatt 91/15**

(45) Bekanntmachung des Hinweises auf die
Patenterteilung :
**15.04.92 Patentblatt 92/16**

(84) Benannte Vertragsstaaten :
**CH DE FR GB IT LI SE**

(56) Entgegenhaltungen :
**EP-A- 0 248 277
FR-A- 2 615 281**

(56) Entgegenhaltungen :
**Applied Optics, Band 19, Nr. 8, 15. April 1980,
Optical Society of America, (New York, US), O.
Sasaki et al.:"Follow-up-type laser Doppler
velocimeter using single-mode optical fibers",
Seiten 1306-1308**

(73) Patentinhaber : **ROBERT BOSCH GMBH
Postfach 30 02 20
W-7000 Stuttgart 30 (DE)**

(72) Erfinder : **BOLLHAGEN, Heins-Erdam
Eltinger Strasse 61
W-7250 Leonberg (DE)**
Erfinder : **DRABAREK, Pawel
Münchinger Strasse 44/5
W-7257 Ditzingen (DE)**

EP 0 420 897 B1

Jouve, 18, rue Saint-Denis, 75001 PARIS

EP 0 420 897 B1

## Beschreibung

Die Erfindung geht aus von einem Verfahren zur optoelektronischen Weg- und Winkelmessung nach der Gattung des Hauptanspruchs. Aus der Firmenschrift "Hewlett-Packard-Journal", Nr. 3, April 1983, ist eine elektrooptische Präzisions-Entfernungs- und Winkelmeßvorrichtung bekannt, bei der die Weginformation über den Doppler-Effekt erhalten wird. Es ist ein Laser vorgesehen, der zwei optische Strahlungen mit unterschiedlichen Frequenzen und unterschiedlichen Polarisationsrichtungen bereitstellt. Die überlagerten Strahlungen gelangen sowohl auf einen ersten Strahlungsempfänger als auch auf einen Strahlteiler, der eine der beiden Strahlungen ablenkt und die andere Strahlung passieren läßt. Die vom Strahlteiler abgelenkte Strahlung trifft auf zwei Umlenkspiegel und gelangt zum Strahlteiler zurück. Dabei durchläuft sie eine vorgegebene optische Strecke. Die vom Strahlteiler durchgelassene Strahlung mit der anderen Frequenz trifft ebenfalls auf zwei Umlenkspiegel und wird auf diejenige Stelle im Strahlteiler zurückgeworfen, auf die auch die abgelenkte zurückgeworfene Strahlung trifft. Die im Strahlteiler überlagerten zurückgeworfenen Strahlungen treffen auf einen zweiten optischen Strahlungsempfänger.

Die beiden Umlenkspiegel im Strahlengang der vom Strahlteiler durch- gelassenen Strahlung sind beweglich angeordnet. Bei einer Bewegung vergrößert oder verkleinert sich die von der durchgelassenen Strahlung durchlaufene optische Strecke. Die Bewegung führt zu einer Erhöhung oder Herabsetzung der Frequenz der reflektierten Strahlung (Doppler-Effekt).

Der erste Strahlungsempfänger stellt ein Ausgangssignal bereit, dessen Frequenz proportional zur Frequenzdifferenz der beiden vom Laser erzeugten Strahlungen ist. Der zweite optische Strahlungsempfänger gibt ein Ausgangssignal ab, dessen Frequenz proportional ist zur Frequenzdifferenz der beiden vom Laser erzeugten Strahlungen vermindert oder erhöht um die Doppler-Frequenz. Die beiden Ausgangssignale gelangen zu einem Frequenzzähler, der die Differenz der beiden Signale ermittelt, wobei als Ergebnis die Doppler-Frequenz erhalten wird, die ein Maß für die Geschwindigkeit der beweglichen Umlenk- spiegel ist. Aus der Geschwindigkeit wird der zurückgelegte Weg bzw. ein Winkel ermittelt.

Gemäß dem erfindungsgemäßen Verfahren zur optoelektronischen Wegund Winkelmessung ist vorgesehen, daß eine erste optische Strahlung und eine zweite optische Strahlung, die gegenüber der ersten Strahlung eine Phasenmodulation aufweist, mit vorgebbaren Einfallswinkeln auf das Objekt gerichtet werden, wobei wenigstens jeweils Teile der beiden Strahlungen denselben Auftreffort am Objekt aufweisen. Am Auftreffort der beiden Strahlungen findet eine Diffraktion und Interferenz statt, weil die Oberfläche des Objekts stets eine Rauhigkeit aufweist, die die Wirkung eines optischen Gitters hat.

Die diffraktierten Strahlungsanteile interferieren und gelangen auf einen ersten Strahlungssensor. Eine Phasenänderung des Sensorausgangssignals in bezug auf die Phase eines Referenzsignals wird als Maß für den zurückgelegten Weg- oder die Winkellage des Meßobjekts ausgewertet. Mit diesen Maßnahmen, in Verbindung mit einem konstanten Abstand zwischen Meßobjekt und Meßvorrichtung, wird der Einfluß von Umgebungsbedingungen wie Luftdruck, Feuchte und Temperatur auf das Meßergebnis reduziert. Weitere Vorteile sind die hohe Auflösung des Meßergebnisses sowie die Stabilität des trägheitslosen und berührungslosen Meßverfahrens.

Eine weitere Reduzierung der Umgebungseinflüsse wird erreicht, wenn der Einfallswinkel der ersten, auf das Meßobjekt gerichteten optischen Strahlung gleich dem negativen Einfallswinkel der zweiten, ebenfalls auf das zu vermessende Objekt gerichteten optischen Strahlung festgelegt wird, und daß der erste optische Sensor in Lotrichtung zur Oberfläche des zu vermessenden Objekts ausgerichtet ist, wobei die Einfallswinkel der beiden Strahlungen auf gegenüberliegenden Seiten des Lots liegen. Mit dieser Maßnahme durchlaufen die beiden Strahlungen gleichlange optische Wege und Umgebungseinflüsse wirken sich in beiden Strahlengängen gleich aus.

In einem ersten Ausführungsbeispiel des erfindungsgemäßen Verfahrens wird das Referenzsignal aus den beiden Strahlungen abgeleitet, indem jeweils ein Teil der beiden, auf das zu vermessende Objekt gerichteten Strahlungen ausgekoppelt und auf einen weiteren Strahlungssensor gerichtet wird, dessen Ausgangssignal als Referenzsignal dient. In einer vorteilhaften Ausgestaltung des ersten Ausführungsbeispiels ist vorgesehen, daß die beiden ausgekoppelten Strahlungen auf eine Mattscheibe gerichtet werden und daß die durch diese Mattscheibe gebeugten Strahlungen auf den weiteren Sensor treffen. Dadurch wird zunächst eine Anpassung der Intensitäten der beiden, auf den weiteren Sensor auftreffenden Strahlungen an die Intensitäten der beiden, auf den ersten Sensor auftreffenden Strahlungen erreicht, so daß die weitere Signalverarbeitung vereinfacht wird. Durch eine Angleichung der optischen Wege im Referenzsignalzweig im Vergleich zum Meßsi- gnalzweig ergibt sich eine weitere Erhöhung der Symmetrie des Aufbaus und somit eine weitere Reduzierung der Umgebungseinflüsse auf das Meßergebnis.

In einem zweiten Ausführungsbeispiel des erfindungsgemäßen Verfahrens ist vorgesehen, daß die beiden ausgekoppelten Strahlungen auf die Oberfläche eines Referenzobjekts gerichtet werden und daß die am Auf-

2

treffort diffraktierten Strahlungen von wenigstens einem weiteren Strahlungssensor erfaßt werden, wobei die beiden, auf das zu vermessende Objekt gerichteten Strahlungen und die auf das Referenzobjekt gerichteten Strahlungen sowie die am zu vermessenden Objekt diffraktierten Strahlungen und die am Referenzobjekt diffraktierten Strahlungen jeweils bis zum Auftreffen auf die beiden Sensoren dieselben optischen Wege zurücklegen. Das zweite Ausführungsbeispiel weist den Vorteil eines vollständig symmetrischen Aufbaus des Meßsignal- und des Referenzsignalzweigs auf.

In einer ersten Ausgestaltung des erfindungsgemäßen Verfahrens ist ein Laser vorgesehen, der eine Strahlung mit einer vorgegebenen Frequenz erzeugt. Die zweite, von der ersten Frequenz unterschiedlichen Frequenz wird von einem akustooptischen Modulator erzeugt, der an geeigneter Stelle in einem der Strahlengänge angeordnet ist.

In einer anderen vorteilhaften Ausgestaltung des erfindungsgemäßn Verfahrens ist ein in der Frequenz modulierbarer Laser vorgesehen. Um in dieser Ausgestaltung ein auswertbares Phasensignal zu erhalten, ist in einem der beiden Strahlengänge eine optische Wegverlängerung vorgesehen. Als modulierbarer Laser eignet sich besonders gut ein Halbleiterlaser.

Das erfindungsgemäße Verfahren läßt sich besonders leicht realisieren, wenn der Meßaufbau in integrierter Optik realisiert wird, wobei auch faseroptische Bauelemente verwendbar sind.

Weitere Einzelheiten und vorteilhafte Weiterbildungen des erfindungsgemäßen Verfahrens ergeben sich aus weiteren Unteransprüchen in Verbindung mit der folgenden Beschreibung.

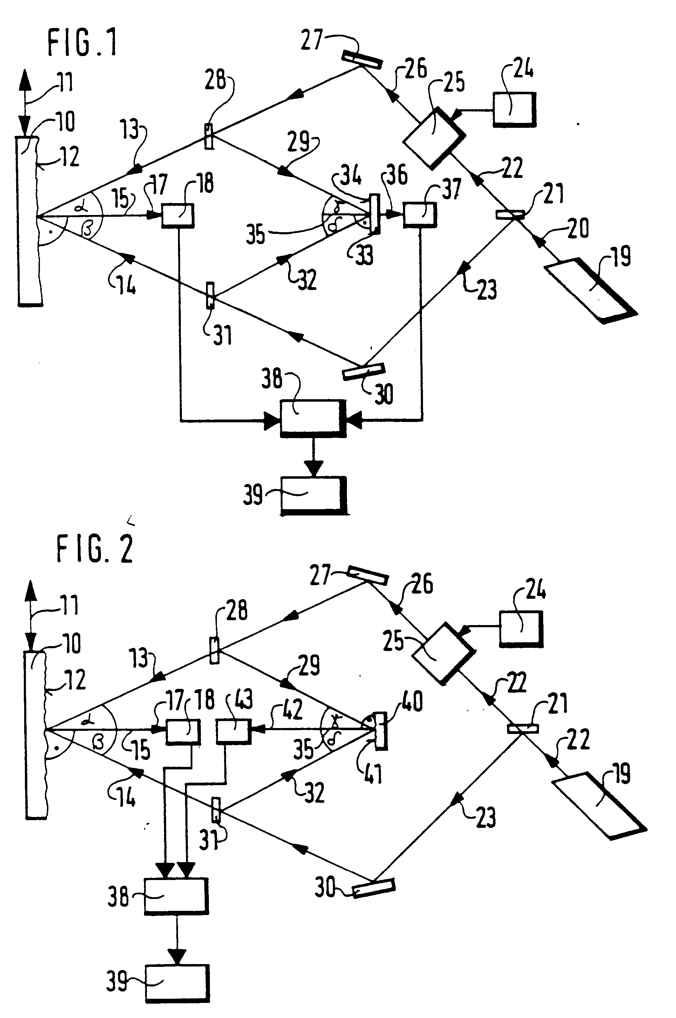

Das erfindungsgemäße Verfahren wird anhand der in den Figuren 1 bis 4 gezeigten Anordnungen näher erläutert.

Figur 1 zeigt ein zu vermessendes Objekt 10, das in der angegebenen Richtung 11 bewegbar ist. Auf die Oberfläche 12 des Objekts 10 werden eine erste und zweite optische Strahlung 13, 14 gerichtet, die mit einem auf der Oberfläche 12 errichteten Lot 15 einen Einfallswinkel $\alpha$ bzw. $\beta$ bilden. Die beiden Einfallswinkel $\alpha$ und $\beta$ liegen beispielsweise auf gegenüberliegenden Seiten des Lots 15. Beispielsweise parallel zum Lot 15 liegt eine an der Oberfläche 12 des zu vermessenden Objekts 10 diffraktierte Strahlung 17, die auf einen ersten Strahlungssensor 18 trifft. Die Sichtachse des Sensors 18 ist in diesem speziellen Fall parallel zum Lot 15 ausgerichtet.

Die beiden Strahlungen 13, 14 werden von einem Laser 19 abgeleitet, dessen Strahlung 20 von einem Strahlteiler 21 in eine erste und zweite Teilstrahlung 22, 23 aufgeteilt wird. Die erste Teilstrahlung 22 gelangt in einen von einem Generator 24 gesteuerten akustooptischen Modulator 25. Die den Modulator 25 verlassende Strahlung 26 weist eine Phasenmodulation gegenüber der zweiten Teilstrahlung 23 auf. Die Phasenmodulation beinhaltet auch den speziellen Fall einer gegen unendlich strebenden Phasenmodulations-Periodendauer, so daß die Strahlungen 23, 26 eine unterschiedliche Frequenz aufweisen. Die Strahlung 26 trifft nach einer Reflexion an einem Umlenkspiegel 27 auf einen Strahlteiler 28, von dem die erste Strahlung 13 und eine erste Referenzstrahlung 29 ausgehen. Die zweite Teilstrahlung 23 trifft nach der Reflexion an einem Umlenkspiegel 30 ebenfalls auf einen Strahlteiler 31 von dem die zweite Strahlung 14 und eine zweite Referenzstrahlung 32 ausgehen.

Die erste Referenzstrahlung 29 trifft unter einem Winkel $\gamma$ und die zweite Referenzstrahlung 32 unter einem Winkel $\delta$ auf eine Mattscheibe 33. Die Winkel $\gamma$ und $\delta$ sind bezogen auf ein auf der Oberfläche 34 der Mattscheibe 33 errichtetes Lot 35. Die an der Mattscheibe 33 diffraktierte und durchgelassene Strahlung 36, die beispielsweise parallel zum Lot 35 ist, gelangt auf einen weiteren Strahlungssensor 37. Die Sichtachse des Sensors 37 ist in diesem speziellen Fall parallel zum Lot 35 ausgerichtet.

Die Ausgangssignale des ersten und des weiteren Strahlungssensors 18, 37 werden einem Phasenvergleicher 38 zugeführt, der ein Ausgangssignal an einen Zähler 39 abgibt.

Das erfindungsgemäße Verfahren wird anhand der in Figur 1 gezeigten Anordnung näher erläutert. Die Oberfläche 12 des zu vermessenden Teils 10 weist stets eine gewisse Rauhigkeit auf, die für eine optische Strahlung als Gitter wirkt, sofern die Abmessung der mikroskopischen Oberflächenstruktur größer oder wenigstens gleich der Wellenlänge der Strahlung ist. Diese Voraussetzung ist für alle technisch herstellbaren Oberflächen erfüllt. Die unter einem Winkel auf die Oberfläche 12 treffende erste optische Strahlung mit einer vorgegebenen Frequenz wird an der Oberfläche 12 diffraktiert und gelangt auf den ersten Sensor 18. Da vorausgesetzt werden kannp daß die Oberfläche 12 Strukturanteile aufweist, deren Abmessungen größer als die der Wellenlänge der ersten Strahlung 13 sind, treten viele Beugungs- bzw. Diffraktionsordnungen auf. Die diffraktierte Strahlung 17 hat auf jeden Fall eine Ordnung ungleich Null. Eine Bewegung des Objekts 10 in der angegebenen Richtung 11 ändert die Phasenlage der diffraktierten Strahlung 17, die vom ersten Sensor 18 aufgenommen wird. Eine Verschiebung des Objekts 10 führt zu einer Phasenänderung. Eine Verschiebung um eine Wellenlänge führt bei vorgegebenen Winkeln $\alpha$ und $\beta$ beispielsweise zu einer Phasenänderung von 360°. Ein besonderer Vorteil dieser Anordnung ist esn daß der Abstand zwischen der Oberfläche 12 und dem ersten Sensor 18 konstant ist. Auswertbar sind die Geschwindigkeiten des Objekts 10 sowie der zurückgelegte Weg.

Anstelle eines in der Figur 1 gezeigten ebenen Objekts 10 kann auch ein Objekt 10 mit einer gekrümmten Oberfläche 12 vermessen werden. Ein derartiges Objekt ist beispielsweise eine kreisförmige Scheibe, deren Winkellage und/oder Winkelgeschwindigkeit bestimmt werden kann.

Die Phasenverschiebung der diffraktierten Strahlung 17 läßt sich ermitteln durch einen Vergleich mit einer Referenzphase. Von der Strahlung 26 wird mit dem Strahlteiler 28 deshalb neben der ersten Strahlung 13 eine erste Referenzstrahlung 29 abgeleitet. Die erste Referenzstrahlung 29 trifft unter einem Winkel γ auf die Mattscheibe 33, in der eine Diffraktion stattfindet. Die diffraktierte Strahlung 36, die nicht der nullten Ordnung entspricht, gelangt auf den weiteren Sensor 37. Der weitere Sensor 37 stellt an seinem Ausgang ein Referenzsignal zur Verfügung.

Mit der soweit beschriebenen Anordnung ist ein Phasenvergleich deshalb noch nicht möglich, weil die Frequenz der optischen Strahlungen 13, 29 von den beiden Sensoren 18, 37 sowie von dem Phasenvergleicher 38 direkt verarbeitet werden müßte. Die diffraktierten Strahlungen 17, 36 werden deshalb mit- einer zweiten optischen Strahlung 14 bzw. mit einer zweiten Referenzstrahlung 32 überlagert und interferieren. Diese beiden Strahlungen werden von der zweiten Teilstrahlung 23 abgeleitet, deren Frequenz sich von der der Strahlung 26 unterscheidet. Der Frequenzunterschied der beiden Strahlungen 26, 23 wird beispielsweise von einem akustooptischen Modulator 25 bewirktp der von einem Generator 24 gesteuert ist. Der Generator 24 erzeugt eine ausreichend niedrige Frequenz, die von den Strahlungssensoren 18, 37 und vom Phasenvergleicher 38 problemlos verarbeitet werden kann. Der akustooptische Modulator 25 kann auch im Strahlengang der zweiten Teilstrahlung 23 angeordnet sein.

Die zweite optische Strahlung 14 wird unter einem Winkel β auf die Oberfläche 12 des zu vermessenden Objekts 10 gerichtet. Wenigstens Teile der ersten und der zweiten Strahlung 13, 14 weisen denselben Auftreffort auf der Oberfläche 12 auf, damit eine Interferenz der beiden Strahlungen stattfinden kann. Die diffraktierte Strahlung 17, die nicht der nullten Ordnung entspricht, wird demnach aus der Überlagerung der diffraktierten ersten und zweiten Strahlung 13, 14 gebildet.

Die zweite Referenzstrahlung 32 trifft unter einem Winkel δ auf die Oberfläche 34 der Mattscheibe 33, in der sie diffraktiert wird. Die gebeugte Strahlung 36, die der weitere Sensor 37 empfängt. ist somit eine Überlagerung der diffraktierten Strahlungsanteile der ersten und zweiten Referenzstrahlung 29, 32.

Die von den Sensoren 18, 37 abgegebenen Signale weisen eine Frequenz auf, die der Differenz der Frequenzen der optischen Strahlungen 23, 26 bzw. der Frequenz des Generators 24 entspricht. Beide Signale sind beispielsweise sinusförmig und haben einen Phasenunterschied, der von der Verschiebung des Objekts 10 linear abhängt. Für den Phasenunterschied $\Delta \phi$ gilt:

$$\Delta \phi = \frac{2 \Pi}{\lambda} \cdot \Delta L \cdot (\sin \alpha + \sin \beta)$$

$\lambda$ : Wellenlänge der Strahlung 23
$\Delta L$ : Verschiebung des Objekts 10

Der Phasenvergleicher 38 gibt ein Ausgangssignal ab, das proportional ist zu einer Verschiebung des Objekts 10 in die eine oder in die andere Richtung. Vielfache einer Phasenverschiebung von 360° werden beispielsweise mit dem Zähler 39 ermittelt, in dem auch eine Umrechnung in Weg und/oder Winkeleinheiten vornehmbar ist.

Ein vorteilhafter symmetrischer Aufbau ergibt sich, wenn wenigstens die Einfallswinkel α, -β und/oder die Winkel γ und -δ jeweils gleich sind. Vollkommene Symmetrie wird erreicht, wenn die Beträge aller Winkel gleich sind. Der Vorteil liegt darin, daß die optischen Wege, die Umgebungseinflüssen ausgesetzt sind, gleich lang sind, so daß die Strahlungsüberlagerung und die anschließende Differenzbildung der Ausgangssignale der Sensoren 18, 37 die Fehlereinflüsse weitgehend kompensieren.

Figur 2 zeigt ein zweites Ausführungsbeispiel einer Anordnung zur Durchführung des erfindungsgemäßen Verfahrens. Diejenigen Teile, die mit den in der Figur 1 gezeigten Teilen übereinstimmen, tragen in Figur 2 dieselben Bezugszahlen wie in Figur 1. Der wesentliche Unterschied bei der in Figur 2 gezeigten Anordnung liegt in der anderen Ausgestaltung des Referenzsignalszweiges, der in Figur 1 im wesentlichen die beiden Referenzstrahlungen 29, 32, die Mattscheibe 33 sowie den weiteren Sensor 37 enthält. Anstelle der Mattscheibe 33 ist ein Referenzobjekt 40 angeordnet. Die beiden Referenzstrahlen 29, 32 sind auf etwa denselben Auftreffort in der Oberfläche 41 des Referenzobjekts 40 gerichtet. Beide Referenzstrahlungen 29, 32 werden am Auftreffort diffraktiert und überlagern sich zur diffraktierten Referenzstrahlung 42, die von einem weiteren Sensor 43 aufgenommen wird. Der Sensor 43 entspricht dem Sensor 37 in Figur 1. Der Vorteil der in Figur 2 gezeigten Anordnung gegenüber der in Figur 1 gezeigten liegt im wesentlichen darin, daß die Anordnung vollkommen symmetrisch aufgebaut ist. Dies trifft insbesondere dann zu, wenn die Oberfläche 41 des Referenzobjekts 40 eine der Oberfläche 12 des zu vermessenden Objekts 10 ähnliche Oberflächenstruktur aufweist und die Winkel α, -β, γ und -δ übereinstimmen und wenn der Abstand zwischen der Oberfläche 12 und dem ersten Sensor 18 und der Abstand zwischen der Oberfläche 41 und dem weiteren Sensor 43 gleich sind. Die Erhöhung der Symmetrie der Anordnung verringert weiter die Umgebungseinflüsse auf das Meßergebnis.

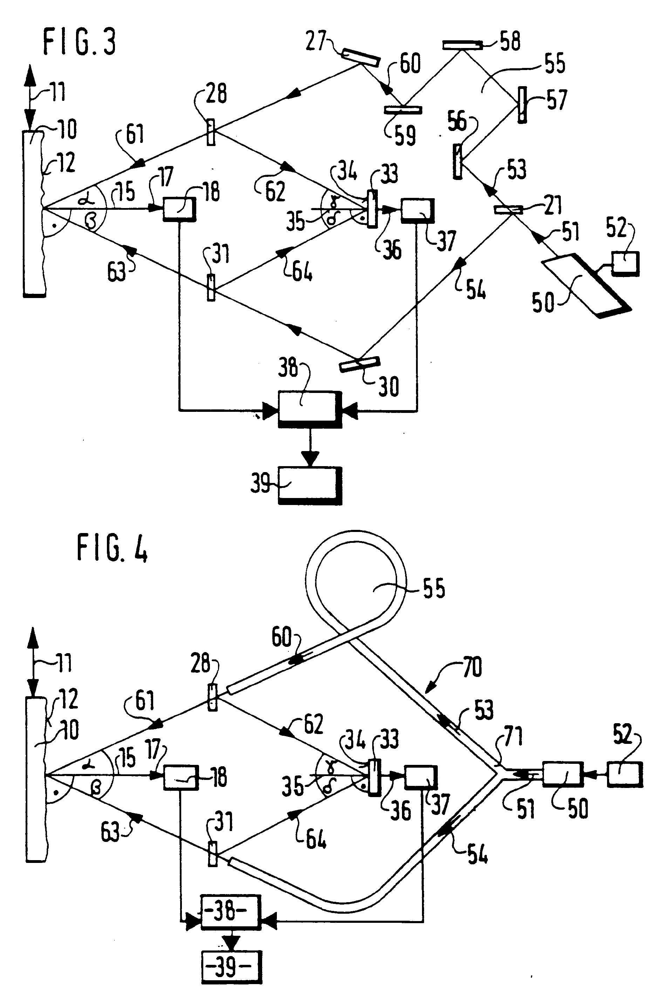

In Figur 3 ist eine weitere Ausgestaltung der in Figur 1 gezeigten Anordnung zur Durchführung des erfindungsgemäßen Verfahrens angegeben. Diejenigen Teile der Figur 3, die mit den in der Figur 1 gezeigten Teilen übereinstimmen, tragen dieselben Bezugszahlen. Der wesentliche Unterschied der in Figur 3 im Vergleich zu der in Figur 1 gezeigten Anordnung liegt in der unterschiedlichen Ausgestaltung zur Erzeugung der unterschiedlichen Frequenzen der ersten und zweiten optischen Strahlung 13, 14. Anstelle des in Figur 1 gezeigten Lasers 19, der eine weitgehend monochromatische Strahlung 20 abgibt, ist ein modulierbarer Laser 50 vorgesehen, der eine Strahlung 51 abgibt, deren Frequenz mit einem Generator 52 veränderbar ist. Die beiden Teilstrahlungen 53, 54 weisen dieselbe Frequenz auf, die sich zeitlich ändert. Die erste Teilstrahlung 53 gelangt in einen optischen Umweg 55, der beispielsweise mit vier Umlenkspiegeln 56 - 59 realisiert ist. Die den optischen Umweg 55 verlassende Strahlung 60 weist gegenüber der zweiten Teilstrahlung 54 eine Phasenverschiebung auf, deren Betrag von der Frequenzänderung der vom Laser 50 abgegebenen Strahlung 51 abhängt. Die Strahlung 60 wird vom Strahlteiler 28 in eine erste einfallende Strahlung 61 und in eine erste Referenzstrahlung 62 aufgeteilt. Die zweite Teilstrahlung 54 wird vom Strahlteiler 31 in eine zweite einfallende Strahlung 63 und in eine zweite Referenzstrahlung 64 aufgeteilt. Im Gegensatz zu den in den Figuren 1 und 2 gezeigten Strahlungen 13, 14 und Referenzstrahlungen 29, 32 weisen die in Figur 3 eingezeichneten Strahlungen 61, 63 und die Referenzstrahlungen 62, 64 dieselbe zeitlich sich ändernde Frequenz auf. Die vom optischen Umweg 55 verursachte zeitabhängige Phasenverschiebung führt dazu, daß die beiden Sensoren 18, 37 Ausgangssignale abgeben, die dieser zeitlich veränderlichen Phasenverschiebung entsprechen. Bei ruhendem Objekt 10 ist die zusätzliche Differenz der vom Phasenvergleicher 38 festgestellten Phasenlage der Ausgangssignale der Sensoren 18, 37 Null. Eine Bewegung des zu vermessenden Objekts 10 führt in der bereits beschriebenen Weise zu einer meßbaren zusätzlichen Phasendifferenz, die in eine Weg- oder in eine Winkelangabe umgerechnet wird.

Ein weiteres Ausführungsbeispiel der in Figur 3 gezeigten Anordnung ist in Figur 4 angegeben. Diejenigen Teile, die mit den in Figur 3 angegebenen Teilen übereinstimmen, tragen in Figur 4 dieselben Bezugszahlen wie in Figur 3. Die vom Laser 50 abgegebene Strahlung 51 wird in einem Lichtleiter 70 geführt. Der Lichtleiter 70 enthält einen integrierten Strahlteiler 71, der die vom Laser kommende Strahlung 51 in die beiden Teilstrahlungen 53, 54 aufteilt. Der optische Umweg 55 ist beispielsweise als eine Lichtleiterschleife realisiert. Die Strahlungsführung im Lichtleiter 70 hört jeweils bei den Strahlteilern 28, 31 auf. In einer weiteren Ausgestaltung der Anordnung ist es möglich, auch den verbleibenden Aufbau mit Lichtleitern und integrierter Optik zu realisieren. Der Vorteil der integrierten Optik mit Lichtleiter-Strahlungsführung besteht hauptsächlich in der Miniaturisierungsmöglichkeit der gesamten Anordnung. Ferner ist man durch die Führung der Strahlung im Lichtleiter 70 nicht mehr auf die geradlinige Ausbreitung der optischen Strahlung in einem Medium mit homogenem optischen Brechungsindex, wie beispielsweise Luft, angewiesen.

Der in Figur 4 gezeigte optische Aufbau mit dem Lichtleiter 70 ist auch in den in den Figuren 1 bis 3 gezeigten Anordnungen verwendbar. Ferner ist die in der Figur 2 gezeigte vollständig symmetrische Anordnung auch bei den in den Figuren 3 und 4 vorgeschlagenen Anordnungen verwendbar, wobei die Mattscheibe 33 durch das Referenzobjekt 40 ersetzt wird.

**Patentansprüche**

1. Verfahren zur optoelektronischen Weg- und/oder Winkelmessung, bei dem eine erste optische Strahlung mit einem vorgebbaren Einfallswinkel ($\alpha$) auf ein zu vermessendes Objekt gerichtet wird, dadurch gekennzeichnet, daß eine zweite optische Strahlung (14, 63), die gegenüber der ersten Strahlung (13, 61) eine Phasenmodulation aufweist, mit einem vorgebbaren Einfallswinkel ($\beta$) auf das zu vermessende Objekt (10) gerichtet wird, daß wenigstens jeweils Teile der beiden Strahlungen (13, 14 bzw. 61, 63) denselben Auftreffort auf der Oberfläche (12) des Objekts (10) aufweisen, daß die am Auftreffort difflektierten und interferierten Strahlungen (17) von wenigstens einem ersten Strahlungssensor (18) erfaßt werden, wobei der bestand zwischen Objekt (10) und Sensor (18) wenigstens näherungsweise konstant ist, und daß eine Phasenänderung des Sensorausgangssignals in bezug auf die Phase eines Referenzsignals als Maß für den zurückgelegten Weg oder die Winkellage des Objekts (10) ausgewertet wird.

2. Verfahren nach Anspruch 1, dadurch gekennzeichnet, daß der Einfallswinkel ($\alpha$) gleich dem negativen Einfallswinkel ($\beta$) ist.

3. Verfahren nach Anspruch 1 oder 2, dadurch gekennzeichnet, daß die Winkel ($\alpha$, $\beta$) auf gegenüberliegenden Seiten eines auf der Oberfläche (12) des Objekts (10) errichteten Lots (15) liegen und daß die Sichtachse des ersten Sensors (18) parallel zum Lot (15) ausgerichtet ist.

4. Verfahren nach Anspruch 1, dadurch gekennzeichnet, daß das Referenzsignal abgeleitet wird aus einer ersten und zweiten Referenzstrahlung (29, 32 bzw. 62, 64), die auf einen weiteren Strahlungssensor (37) gerichtet werden, dessen Ausgangssignal als Referenzsignal herangezogen wird.

5. Verfahren nach Anspruch 4, dadurch gekennzeichnet, daß die beiden Referenzstrahlungen (29, 32 bzw. 62, 64) jeweils unter einem vorgegebenen Winkel ($\gamma$ bzw. $\delta$) auf eine Mattscheibe (33) gerichtet werden, daß wenigstens jeweils Teile der beiden Referenzstrahlungen (29, 32 bzw. 62, 64) denselben Auftreffpunkt auf der Oberfläche (34) der Mattscheibe (33) aufweisen und daß die durch die Mattscheibe (33) diffraktierte und interferierte Strahlung (36) vom weiteren Sensor (37) aufgenommen wird.

6. Verfahren nach Anspruch 4 oder 5, dadurch gekennzeichnet, daß der Einfallswinkel ($\gamma$) gleich dem negativen Einfallswinkel ($\delta$) ist.

7. Verfahren nach einem der Ansprüche 4 bis 6, dadurch gekennzeichnet, daß die Winkel ($\gamma$, $\delta$) auf gegenüberliegenden Seiten eines auf der Oberfläche (34) der Mattscheibe (33) errichteten Lots (35) liegen und daß die Sichtachse des weiteren Sensors (37) parallel zum Lot (35) ausgerichtet ist.

8. Verfahren nach einem der Ansprüche 4 bis 7, dadurch gekennzeichnet, daß die Winkel ($\alpha$, -$\beta$, $\gamma$ und -$\delta$) gleich sind.

9. Verfahren nach Anspruch 4, dadurch gekennzeichnet, daß die beiden Referenzstrahlungen (29, 32 bzw. 62, 64) auf die Oberfläche (41) eines Referenzobjekts (40) gerichtet werden, daß wenigstens jeweils Teile der Referenzstrahlungen (29, 32 bzw. 62, 64) denselben Auftreffort auf der Oberfläche (41) des Referenzobjekts (40) aufweisen und daß die am Auftreffort diffraktierten und interferierte Strahlung (42) von einem weiteren Strahlungssensor (43) erfaßt wird, wobei die erste und zweite optische Strahlung (13, 14 bzw. 61, 63), die erste und zweite Referenzstrahlung (29, 32 bzw. 62, 64) sowie die auf der Oberfläche (12) des zu vermessenden Objekts diffraktierte Strahlung (17) und die an der Oberfläche (41) des Referenzobjekts (40) diffraktierte Strahlung (42) jeweils bis zum Auftreffen auf die Sensoren (18, 43) dieselben optischen Wege zurücklegen.

10. Verfahren nach Anspruch 1, dadurch gekennzeichnet, daß als Strahlungsquelle ein Laser (19) verwendet wird, dessen Strahlung im wesentlichen monochromatisch ist, und daß in einer von zwei Teilstrahlungen (22, 23) ein von einem Generator (24) gesteuerter akustooptischer Modulator (25) angeordnet ist.

11. Verfahren nach Anspruch 1, dadurch gekennzeichnet, daß ein von einem Generator (52) frequenzmodulierbarer Laser (50) verwendet wird und daß in einer von zwei Teilstrahlungen (53, 54) ein optischer Umweg (55) vorgesehen ist.

12. Verfahren nach Anspruch 10 oder 11, dadurch gekennzeichnet, daß ein Halbleiterlaser (19, 50) verwendet wird.

13. Verfahren nach einem der vorhergehenden Ansprüche, dadurch gekennzeichnet, daß wenigstens Teile der Strahlungen (13, 14, 20, 22, 23, 26, 29, 32, 51, 53, 54, 60, 61, 62, 63, 64) in Lichtleiter (70) geführt werden.

14. Verfahren nach einem der vorhergehenden Ansprüche, dadurch gekennzeichnet, daß wenigstens Teile der optischen Komponenten (21, 28, 30, 31) integrierte optische Bauelemente (61) sind.


## Claims

1. Method for opto-electronic distance and/or angle measurement, in which a first optical beam is directed with a predeterminable angle of incidence ($\alpha$) onto an object to be measured, characterised in that a second optical beam (14, 63), which exhibits a phase modulation compared with the first beam (13, 61) is directed with a predeterminable angle of incidence ($\beta$) onto the object to be measured (10), in that in each case at least parts of the two beams (13, 14 and 61, 63) exhibit the same location of impingement on the surface (12) of the object (10), in that the beams (17) deflected [sic] at the location of impingement and interfered are detected by at least one first beam sensor (18), the distance between object (10) and sensor (18) being at least approximately constant, and in that a phase change in the sensor output signal with respect to the phase of a reference signal is evaluated as a measure of the distance travelled or the angular position of the object (10).

2. Method according to Claim 1, characterised in that the angle of incidence ($\alpha$) is equal to the negative angle of incidence ($\beta$).

3. Method according to Claim 1 or 2, characterised in that the angles ($\alpha$, $\beta$) are located on opposite sides of a perpendicular (15) erected on the surface (12) of the object (10), and in that the axis of sight of the first sensor (18) is aligned in parallel with the perpendicular (15).

4. Method according to Claim 1, characterised in that the reference signal is derived from a first and second reference beam (29, 32 and 62, 64) which are directed onto a further beam sensor ( 37 ), the output signal of which is used as reference signal.

5. Method according to Claim 4, characterised in that the two reference beams (29, 32 and 62, 64) are in each case directed at a predetermined angle ($\gamma$ and $\delta$ respectively) onto a ground glass screen (33), in that in each case at least parts of the two reference beams (29, 32 and 62, 64) exhibit the same point of impingement on the surface (34) of the ground glass screen (33), and in that the beam (36) diffracted by the ground glass screen (33) and interfered is picked up by the further sensor (37).

6. Method according to Claim 4 or 5, characterised in that the angle of incidence (γ) is equal to the negative angle of incidence (δ).

7. Method according to one of Claims 4 to 6, characterised in that the angles (γ, δ) are located on opposite sides of a perpendicular (35) erected on the surface (34) of the ground glass screen (33), and in that the axis of sight of the further sensor (37) is aligned in parallel with the perpendicular (35).

8. Method according to one of Claims 4 to 7, characterised in that the angles (α, -β, γ and -δ) are equal.

9. Method according to Claim 4, characterised in that the two reference beams (29, 32 and 62, 64) are directed onto the surface (41) of a reference object (40), in that in each case at least parts of the reference beams (29, 32 and 62, 64) exhibit the same location of impingement on the surface (41) of the reference object (40), and in that the beam (42) diffracted at the location of impingement and interfered is detected by a further beam sensor (43), in which arrangement the first and second optical beam (13, 14 and 61, 63), the first and second reference beam (29, 32 and 62, 64) and the beam (17) diffracted on the surface (12) of the object to be measured and the beam (42) diffracted on the surface (41) of the reference object (40) in each case travel the same optical distances until they impinge on the sensors (18, 43).

10. Method according to Claim 1, characterised in that a laser (19) is used as beam source, the beam of which is essentially monochromatic, and in that an acousto-optical modulator (25) controlled by a generator (24) is arranged in one of two part-beams (22, 23).

11. Method according to Claim 1, characterised in that a laser (50) which can be frequency-modulated by a generator (52) is used, and in that an optical detour (55) is provided in one of two part-beams (53, 54).

12. Method according to Claim 10 or 11, characterised in that a semiconductor laser (19, 50) is used.

13. Method according to one of the preceding claims, characterised in that at least parts of the beams (13, 14, 20, 22, 23, 26, 29, 32, 51, 53, 54, 60, 61, 62, 63, 64) are conducted in optical waveguides (70).

14. Method according to one of the preceding claims, characterised in that at least parts of the optical components (21, 28, 30, 31) are integrated optical components (61).

**Revendications**

1. Procédé de mesure de déplacement et/ou d'angle optoélectronique, dans lequel un premier rayon optique est dirigé sur un objet à mesurer sous un angle d'incidence (α) pouvant être prédéfini, procédé caractérisé en ce qu'un deuxième rayon optique (14, 63), qui présente une modulation de phase par rapport au premier rayon (13, 61), est dirigé avec un angle d'incidence (β) pouvant être prédéfini sur l'objet à mesurer (10), en ce qu'au moins les parties respectives des deux rayons (13, 14 ou 61, 63) présentent le même point d'impact sur la surface (12) de l'objet (10), en ce que les rayons (17) diffractés et en interférence au point d'impact sont captés par au moins un premier détecteur de rayon (18), la distance entre l'objet (10) et le détecteur (18) étant au moins de façon approchée constante, et en ce que une variation de phase du signal de sortie du détecteur par rapport à la phase d'un signal de référence est exploitée comme mesure du chemin parcouru ou de la position angulaire de l'objet (10).

2. Procédé selon la revendication 1, caractérisé en ce que l'angle d'incidence (α) est égal à l'angle d'incidence négatif (β).

3. Procédé selon la revendication 1 ou la revendication 2, caractérisé en ce que les angles (α, β) se trouvent de part et d'autre d'une verticale (15) élevée sur la surface (12) de l'objet (10) et en ce que l'axe de vision du premier détecteur (18) est orienté parallèlement à la verticale (15).

4. Procédé selon la revendication 1, caractérisé en ce que le signal de référence est envoyé à partir d'un premier et d'un deuxième signal de référence (29, 32 ou 62, 64) qui sont dirigés sur un autre détecteur de rayon (37), dont le signal de sortie est pris comme signal de référence.

5. Procédé selon la revendication 4, caractérisé en ce que les deux rayons de référence (29, 32 ou 62, 64) sont respectivement dirigés sous un angle prédéfini (γ ou δ) sur un écran dépoli (33), en ce qu'au moins les parties respectives des deux rayons de référence (29, 32 ou 62, 64) présentent le même point d'impact sur la surface (34) de l'écran dépoli (33) et en ce que le rayon diffracté en interférence (36) par l'écran dépoli (33) est recueilli par l'autre détecteur (37).

6. Procédé selon la revendication 4 ou 5, caractérisé en ce que l'angle d'incidente (γ) est égal à l'angle d'incidence négatif (δ).

7. Procédé selon l'une des revendications 4 à 6, caractérisé en ce que les angles (γ, δ) se trouvent de part et d'autre d'une vertical (35) élevée sur la surface (34) de l'écran dépoli (33) et en ce que l'axe de vision de l'autre détecteur (37) est orienté parallèlement à la verticale (35).

8. Procédé selon l'une des revendications 4 à 7, caractérisé en ce que les angles ($\alpha$, -$\beta$, $\gamma$ et -$\delta$) sont égaux.

9. Procédé selon la revendication 4, caractérisé en ce que les deux rayons de référence (29, 32 ou 62, 64) sont dirigés sur la surface (41) d'un objet de référence (40), en ce qu'au moins les parties respectives des rayons de référence (29, 32 ou 62, 64) présentent le même point d'impact sur la surface (41) de l'objet de référence (40) et en ce que le rayon (42) diffracté et en interférence au point d'impact est capté par un autre détecteur de rayon (43), le premier et le deuxième rayon optique (13, 14 ou 62, 64) ainsi que le rayon diffracté (17) sur la surface (12) de l'objet à mesurer et le rayon (42) diffracté à la surface (41) de l'objet de référence (40) parcourent respectivement le même chemin optique jusqu'à ce qu'ils atteignent les détecteurs (18, 43).

10. Procédé selon la revendication 1, caractérisé en ce que l'on utilise un laser (19) comme source de rayon, laser dont le rayon est essentiellement monochromatique, et en ce que dans l'un des deux rayons partiels (22, 23) on dispose un modulateur (25) optoacoustique commandé par un générateur (24).

11. Procédé selon la revendication 1, caractérisé en ce qu'on utilise un laser (50) dont la fréquence peut être modulée par un générateur (52), et en ce qu'il est prévu un détour optique (55) dans l'un des deux rayons partiels (53, 54).

12. Procédé selon la revendication 10 ou 11, caractérisé en ce qu'on utilise un laser semiconducteur (19, 50).

13. Procédé selon l'une des revendications précédentes, caractérisé en ce qu'au moins des parties des rayons (13, 14, 20, 22, 23, 26, 29, 32, 51, 53, 54, 60, 61, 62, 63, 64) sont guidés dans des câbles à fibres optiques (70).

14. Procédé selon l'une des revendications précédentes, caractérisé en ce qu'au moins des parties des composants optiques (21, 28, 30, 31) sont des éléments constitutifs optiques intégrés (61).

FIG.1

FIG.2

FIG. 3

FIG. 4